**Europäisches Patentamt**

**European Patent Office**

**Office européen des brevets**

(11) Veröffentlichungsnummer: **0 420 016 A2**

# EUROPÄISCHE PATENTANMELDUNG

(21) Anmeldenummer: **90117974.7**

(22) Anmeldetag: **19.09.90**

(51) Int. Cl.5: **C08L 75/04**, C08G 18/66, C08G 18/76, //(C08L75/04, 67:00,51:00)

(30) Priorität: **28.09.89 DE 3932359**

(43) Veröffentlichungstag der Anmeldung: **03.04.91 Patentblatt 91/14**

(84) Benannte Vertragsstaaten:
**BE CH DE ES FR GB LI NL SE**

(71) Anmelder: **BASF Aktiengesellschaft Carl-Bosch-Strasse 38 W-6700 Ludwigshafen(DE)**

(72) Erfinder: **Lausberg, Dietrich, Dr. Nachtigalstrasse 32a W-6700 Ludwigshafen(DE)**
Erfinder: **Steinberger, Rolf, Dr. Am Moenchhof 77 W-6707 Schifferstadt(DE)**
Erfinder: **Faehndrich, Knud Lohneufer 14 W-2840 Diepholz(DE)**
Erfinder: **Schulz, Harald Felix-Oberburbeck-Strasse 9 W-2848 Vechta(DE)**

(54) **Schlagzäh modifizierte thermoplastische Polyurethan-Polyester-Formmassen, Verfahren zu ihrer Herstellung und ihre Verwendung.**

(57) Gegenstände der Erfindung sind schlagzäh modifizierte thermoplastische Polyurethan-Polyester-Formmassen, die, bezogen auf 100 Gew.-Teile (A) bis (C), enthalten

A) 30 bis 90 Gew.-Teile mindestens eines thermoplastischen Polyurethan-Elastomeren,

B) 5 bis 65 Gew.-Teile mindestens eines thermoplastischen Polyesters, vorzugsweise ein Polyalkylenterephthalat, und

C) 5 bis 30 Gew.-Teile mindestens eines Pfropfkautschuks auf der Grundlage eines Polybutadiens (C1) oder Polyacrylats (C2) oder einer Mischung dieser Pfropfkautschuke
sowie

D) 0 bis 60 Gew.% mindestens eines faser- und/oder teilchenförmigen Füllstoffs und

E) 0 bis 10 Gew.% mindestens eines Hilfsstoffes, wobei die Gewichtsprozente bezogen sind auf das Gewicht von (A) bis (C),

ein Verfahren zu ihrer Herstellung durch Homogenisierung der Aufbaukomponenten bei einer Temperatur im Bereich von 190 bis 250° C sowie ihre Verwendung zur Herstellung von Formkörpern.

EP 0 420 016 A2

EP 0 420 016 A2

## SCHLAGZÄH MODIFIZIERTE THERMOPLASTISCHE POLYURETHAN-POLYESTER-FORMMASSEN, VERFAHREN ZU IHRER HERSTELLUNG UND IHRE VERWENDUNG

Gegenstand der Erfindung sind schlagzäh modifizierte thermoplastische Polyurethan-Polyester-Formmassen, die enthalten

A) mindestens ein thermoplastisches Polyurethan-Elastomeres, im folgenden abgekürzt "TPU" genannt,

B) mindestens einen thermoplastischen Polyester, im folgenden abgekürzt "PES" genannt und

C) mindestens einen Pfropfkautschuk auf der Grundlage eines Polybutadiens (C1) oder Polyacrylats (C2) sowie gegebenenfalls

D) Füllstoffe und/oder

E) Hilfsstoffe.

Thermoplastische Formmassen aus TPU und PES sind bekannt.

Materialien mit verbesserter Tieftemperatur-Schlagzähigkeit bestehen nach Angaben der DE-A-26 46 647 (GB 1 513 197) aus einer innigen Mischung von 50 bis 75 Gew.-Teilen eines TPU und 25 bis 50 Gew.% eines Polybutylenterephthalats, abgekürzt auch "PBT" genannt. In der CA-A-1 111 984 werden ebenfalls TPU/PBT-Massen beschrieben, die jedoch, bezogen auf das Gesamtgewicht, aus 5 bis 95 Gew.% TPU und 95 bis 5 Gew.% PBT bestehen. Nachteilig an diesen TPU/PBT-Formmassen sind jedoch die unzureichende Kerbschlagzähigkeit und ungenügende multiaxiale Zähigkeit, besonders bei tiefen Temperaturen.

TPU-Mischungen, die Verarbeitungshilfsmittel enthalten, und aufgebaut sind aus 40 bis 100 Gew.% eines TPU, 0 bis 60 Gew.% eines thermoplastischen Polymeren, ausgewählt aus der Gruppe der Polycarbonate, Polyoxymethylene, Acrylnitril-Butadien-Styrol-Pfropfcopolymeren, PBT, Polyethylenterephthalat oder Mischungen davon und 0,5 bis 10 Gew.% bezogen auf das Gesamtgewicht aus TPU und dem anderen thermoplastischen Polymeren, eines Verarbeitungshilfsmittels auf Polyacrylatbasis, ausgewählt aus einem Methylmethacrylathomopolymeren, einem Methylmethacrylat-n-butylmethacrylat- oder Methylmethacrylat-Ethylacrylat-copolymeren oder einem Terpolymeren aus Methylmethacrylat, n-Butylacrylat und Styrol, sind bekannt aus der US-A-4 179 479. Die beschriebenen Massen auf der Grundlage von TPU, PBT oder Polyethylenterephthalat und dem im wesentlichen linearen (Meth)acrylat-homo- oder -copolymeren besitzen jedoch eine unbefriedigende Zähigkeit bei tiefen Temperaturen und sind schwierig verarbeitbar.

Die Aufgabe der vorliegenden Erfindung bestand darin, die vorgenannten Nachteile möglichst vollständig zu beseitigen und TPU/PES-Formmassen zu entwickeln, die eine deutlich verbesserte Kältezähigkeit, auch bei tiefen Temperaturen, besitzen und sich problemlos zu Formkörpern verarbeiten lassen.

Diese Aufgabe konnte überraschenderweise gelöst werden durch Einbringen mindestens eines Pfropfkautschuks (C) auf der Grundlage eines Polybutadiens (C1) oder Polyacrylats (C2) in TPU/PES-Formmassen bestimmter zusammensetzungen.

Gegenstand der Erfindung sind somit schlagzäh modifizierte thermoplastische Polyurethan-Polyesterformmassen, die enthalten oder vorzugsweise bestehen aus, bezogen auf 100 Gew.-Teile (A) bis (C),

A) 30 bis 90 Gew.-Teilen, vorzugsweise 40 bis 80 Gew.-Teilen, mindestens eines TPU (A),

B) 5 bis 65 Gew.-Teilen, vorzugsweise 10 bis 60 Gew.-Teilen, mindestens eines PES (B) und

C) 5 bis 30 Gew.-Teilen, vorzugsweise 5 bis 20 Gew.-Teilen, mindestens eines Pfropfkautschuks (C) auf der Grundlage eines

C1) Polybutadiens oder

C2) Polyacrylats

oder einer Mischung von Pfropfkautschuken auf der Grundlage von (C1) und (C2) sowie, bezogen auf das Gesamtgewicht von (A) bis (C)

D) 0 bis 60 Gew.%, vorzugsweise 2 bis 50 Gew.% mindestens eines faser-und/oder teilchenförmigen Füllstoffs und

E) 0 bis 10 Gew.%, vorzugsweise 0 bis 5 Gew.%, mindestens eines Hilfsstoffes.

Gegenstände der Erfindung sind ferner ein Verfahren zur Herstellung der erfindungsgemäßen TPU/PES-Formmassen durch Homogenisieren der Aufbaukomponenten bei einer Temperatur im Bereich von 190 bis 250°C in einer geeigneten Mischvorrichtung gemäß Anspruch 12 und die Verwendung der schlagzäh modifizierten TPU/PES-Formmassen zur Herstellung von Formkörpern gemäß Anspruch 13.

Wie bereits dargelegt wurde, weisen die erfindungsgemäßen TPU/PES-Formmassen eine sehr gute Kältezähigkeit auf. Erwähnenswert ist außerdem ihre sehr gute Verarbeitbarkeit zu Formkörpern mittels der Spritzgußtechnik, die hierbei erforderlichen kurzen Zykluszeiten und gute Entformbarkeit. Die TPU/PES-Formmassen besitzen ferner eine ausgezeichnete Beständigkeit gegen organische Lösungsmittel.

2

Die zur Herstellung der erfindungsgemäßen TPU/PES-Formmassen verwendbaren TPU (A) entsprechen dem Stand der Technik und können hergestellt werden durch Umsetzung von

a) organischen, vorzugsweise aromatischen Diisocyanaten, insbesondere 4,4'-Diphenylmethan-diisocyanat, mit

b) Polyhydroxylverbindungen, vorzugsweise im wesentlichen linearen Polyhydroxylverbindungen mit Molekulargewichten von 500 bis 8000, insbesondere Polyalkylenglykolpolyadipaten mit 2 bis 6 C-Atomen im Alkylenrest und Molekulargewichten von 500 bis 6000 oder hydroxylgruppenhaltigem Polytetrahydrofuran mit einem Molekulargewicht von 500 bis 8000 und

c) Diolen als Kettenverlängerungsmitteln mit Molekulargewichten von 60 bis 400, insbesondere Butandiol-1,4 in Gegenwart von

d) Katalysatoren und gegebenenfalls

e) Hilfsmitteln und/oder

f) Zusatzstoffen bei erhöhten Temperaturen.

Zu den TPU-Aufbaukomponenten (a) bis (d) und gegebenenfalls (e) und/oder (f) ist folgendes auszuführen:

a) als organische Diisocyanate (a) kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethyl-butylen-diisocyanat-1,4 oder Mischungen aus mindestens zwei der genannten aliphatischen Diisocyanate, cycloaliphatische Diisocyanate, wie Isophoron-diisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'- und 2, 2'-Diphenylmethan-diisocyanat, Gemische aus 2,4'- und 4,4'-Diphenylmethan-diisocyanat, urethanmodifizierte flüssige 4,4'- und/oder 2, 4'-Diphenylmethan-diisocyanate, 4,4'-Diisocyanato-diphenylethan-1,2, Gemische aus 4,4'-, 2,4'- und 2,2'-Diisocyanato-diphenylethan-1,2, vorteilhafterweise solche mit einem 4,4'-Diisocyanato-diphenylethan-1,2-Gehalt von mindestens 95 Gew.% und 1,5-Naphthylen-diisocyanat. Vorzugsweise verwendet werden Diphenylmethan-diisocyanat-Isomerengemische mit einem 4,4'-Diphenylmethan-diisocyanatgehalt von größer als 96 Gew.% und insbesondere im wesentlichen reines 4,4'-Diphenylmethan-diisocyanat.

Die organischen Diisocyanate können gegebenenfalls in untergeordneten Mengen, z.B. in Mengen bis zu 3 Mol.%, vorzugsweise bis zu 1 Mol%, bezogen auf das organische Diisocyanat, durch ein tri- oder höherfunktionelles Polyisocyanat ersetzt werden, wobei dessen Mengen jedoch so begrenzt werden muß, daß noch thermoplastisch verarbeitbare Polyurethane erhalten werden. Eine größere Menge an derartigen mehr als difunktionellen Isocyanaten wird zweckmäßigerweise durch die Mitverwendung von weniger als difunktionellen Verbindungen mit reaktiven Wasserstoffatomen ausgeglichen, so daß eine zu weitgehende chemische Vernetzung des Polyurethans vermieden wird. Beispiele für mehr als difunktionelle Isocyanate sind Mischungen aus Diphenylmethan-diisocyanaten und Polyphenyl-polymethylen-polyisocyanaten, sog. Roh-MDI sowie flüssige, mit Isocyanurat-, Harnstoff-, Biuret-, Allophanat-, Urethan- und/oder Carbodiimidgruppen modifizierte 4,4'- und/oder 2,4'-Diphenylmethan-diisocyanate.

Als geeignete monofunktionelle Verbindungen mit reaktivem Wasserstoffatom, die auch als Molekulargewichtsregler verwendbar sind, seien z.B genannt: Monoamine wie z.B. Butyl-, Dibutyl-, Octyl-, Stearyl-, N-Methylstearylamin, Pyrrolidon, Piperidin und Cyclohexylamin, und Monoalkohole wie z.B. Butanol, Amylalkohol, 1-Ethylhexanol, Octanol, Dodecanol, Cyclohexanol und Ethylenglykolmonoethylether.

b) Als höhermolekulare Polyhydroxylverbindungen (b) mit Molekulargewichten von 500 bis 8000 eignen sich vorzugsweise Polyetherole und insbesondere Polyesterole. In Betracht kommen jedoch auch andere hydroxylgruppenhaltige Polymere mit Ether- oder Estergruppen als Brückenglieder, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 3, vorzugsweise 2 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest

3

hergestellt werden.

Geeignete Alkylenoxide sind bevorzugt beispielsweise Tetrahydrofuran, 1,3-Propylenoxid, 1,2- bzw. 2,3-Butylenoxid und insbesondere bevorzugt Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure und/oder Glutarsäure, Alkanolamine, wie z.B. Ethanolamin, N-Alkylalkanolamine, N-Alkyl-dialkanolamine, wie z.B. N-Methyl- und N-Ethyl-diethanolamin und vorzugsweise zweiwertige, gegebenenfalls Etherbrücken gebunden enthaltende Alkohole, wie z.B. Ethandiol, Propandiol-1,2 und -1,3, Butandiol-1,4, Diethylenglykol, Pentandiol-1,5, Hexandiol-1,6,

Dipropylenglykol, 2-Methylpentandiol-1,5 und 2-Ethyl-butandiol-1,4. Die Startermoleküle können einzeln oder als Gemische eingesetzt werden.

Vorzugsweise verwendet werden Polyetherole aus 1,2-Propylenoxid und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist. Derartige Polyetherole können erhalten werden, indem man z.B. an das Startermolekül zunächst das 1,2-Propylenoxid und daran anschließend das Ethylenoxid polymerisiert oder zunächst das gesamte 1,2-Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte 1,2-Propylenoxid und dann den Rest des Ethylenoxids an das Startermolekül anpolymerisiert.

Insbesondere geeignet sind ferner die hydroxylgruppenhaltigen Polymerisationsprodukte des Tetrahydrofurans.

Die im wesentlichen linearen Polyetherole besitzen Molekulargewichte von 500 bis 8000, vorzugsweise 600 bis 6000 und insbesondere 800 bis 3500, wobei die Polyoxytetramethylen-glykole bevorzugt Molekulargewichte von 500 bis 2800 aufweisen. Sie können sowohl einzeln als auch in Form von Mischungen untereinander zur Anwendung kommen.

Geeignete Polyesterole können beispielsweise aus Dicarbonsäuren mit 2 bis 12, vorzugsweise 4 bis 6 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. zur Herstellung der Polyesterole kann es gegebenenfalls vorteilhaft sein, anstelle der Dicarbonsäuren die entsprechenden Dicarbonsäurederivate, wie Dicarbonsäuremono- oder -diester mit 1 bis 4 Kohlenstoffatomen im Alkoholrest, Dicarbonsäureanhydride oder Dicarbonsäuredichloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropan diol-1,3, Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 500 bis 6000, vorzugsweise von 800 bis 3500.

c) Als Kettenverlängerungsmittel (c) mit Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4 und Hydroxyalkylenether des Hydrochinons, wie z.B. 1,4-Di-(β-hydroxyethyl)-hydrochinon sowie Polytetramethylenglykole mit Molekulargewichten von 162 bis 378.

Zur Einstellung von Härte und Schmelzindex können die Aufbaukomponenten in relativ breiten molaren Verhältnissen variiert werden, wobei die Härte und die Schmelzviskosität mit zunehmendem Gehalt an Kettenverlängerungsmittel (c) ansteigt, während der Schmelzindex abnimmt.

Zur Herstellung von weicheren TPU (A), z.B. solchen mit einer Härte Shore A von kleiner als 95, vorzugsweise von 95 bis 75 Shore A, können beispielsweise die im wesentlichen difunktionellen Polyhydroxylverbindungen (b) und Diole (c) vorteilhafterweise in Molverhältnissen von 1:1 bis 1:5, vorzugsweise 1:1,5 bis 1:4,5 verwendet werden, so daß die resultierenden Mischungen aus (b) und (c) ein Hydroxyläquivalentgewicht von größer als 200, und insbesondere von 230 bis 450 besitzen, während zur Herstellung von härteren TPU (A), z.B. solchen mit einer Härte Shore A von größer als 98, vorzugsweise von 55 bis 75 Shore D, die Molverhältnisse von (b):(c) im Bereich von 1:5,5 bis 1:15, vorzugsweise von 1:6 bis 1:12 liegen, so daß die erhaltenen Mischungen aus (b) und (c) ein Hydroxyläquivalentgewicht von 110 bis 200, vorzugsweise von 120 bis 180 aufweisen.

d) Geeignete Katalysatoren, welche insbesondere de Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, Diazabicyclo-(2,2,2)-octan und ähnliche sowie insbesondere organische Metallverbindungen wie Titansäureester, Eisenverbindungen, Zinnverbindungen, z.B. Zinndiacetat, zinndioctoat, zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Gew.-Teilen pro 100 Gew.-Teilen der Mischung aus Polyhydroxylverbindungen (b) und Diolen (c) eingesetzt.

Neben Katalysatoren können den Aufbaukomponenten auch Hilfsmittel (e) und/oder Zusatzstoffe (f) einverleibt werden. Genannt seien beispielsweise Gleitmittel, Inhibitoren, Stabilisatoren gegen Hydrolyse, Licht, Hitze oder Verfärbung, Flammschutzmittel, Farbstoffe, Pigmente, anorganische und/oder organische Füllstoffe und Verstärkungsmittel.

Die Hilfsmittel (e) und/oder Zusatzstoffe (f) können hierzu in die Aufbaukomponenten oder in die Reaktionsmischung zur Herstellung der TPU (A) eingebracht werden. Nach einer anderen Verfahrensvariante können die Hilfsmittel (e) und/oder Zusatzstoffe (f), die mit dem Hilfsstoff (E) identisch sein können, jedoch mit dem TPU (A), dem PES (B) und/oder Pfropfkautschuk (C) gemischt und anschließend verschmolzen werden oder sie werden direkt der Schmelze aus den Komponenten (A), (B) und (C) einverleibt. Die zuletzt genannte Methode findet insbesondere auch Anwendung zum Einbringen der faser- und/oder teilchenförmigen Füllstoffe (D).

Sofern zu den verwendbaren Hilfsmitteln oder Zusatzstoffen nachfolgend keine näheren Angaben gemacht werden, können diese der Fachliteratur, beispielsweise der Monographie von J.H. Saunders und K.C. Frisch "High Polymers", Band XVI, Polyurethane, Teil 1 und 2 (Verlag Interscience Publishers 1962 bzw. 1964), dem Kunststoff-Handbuch, Band 7, Polyurethane 1. und 2. Auflage (Carl Hanser Verlag, 1966 bzw. 1983) oder der DE-OS 29 01 774 entnommen werden.

Zur Herstellung der TPU (A) werden die Aufbaukomponenten (a), (b) und (c) in Gegenwart von Katalysatoren (d) und gegebenenfalls Hilfsmitteln (e) und/ oder Zusatzstoffen (f) in solchen Mengen zur Reaktion gebracht, daß das Äquivalenzverhältnis von NCO-Gruppen der Diisocyanate zur Summe der Hydroxylgruppen der Komponenten (b) und (c) 0,95 bis 1,10:1, vorzugsweise 0,98 bis 1,08:1 und insbesondere ungefähr 1,0 bis 1,05:1 beträgt.

Die erfindungsgemäß verwendbaren TPU (A), die üblicherweise 8 bis 20 Gew.%, vorzugsweise 8 bis 16 Gew.%, bezogen auf das Gesamtgewicht, Urethangruppen gebunden enthalten und einen Schmelzindex bei 210°C von 500 bis 1, vorzugsweise 100 bis 1 aufweisen, können hergestellt werden nach dem Extruder- oder vorzugsweise Bandverfahren durch batchweises oder kontinuierliches Mischen der Aufbaukomponenten (a) bis (d) sowie gegebenenfalls (e) und/oder (f), Ausreagierenlassen der Reaktionsmischung im Extruder oder auf einem Trägerband bei Temperaturen von 60 bis 250°C, vorzugsweise 70 bis 150°C und anschließendes Granulieren der erhaltenen TPU (A). Gegebenenfalls kann es zweckmäßig sein das erhaltene TPU (A) vor der Weiterverarbeitung zu den erfindungsgemäßen TPU/PES-Formmassen bei 80 bis 120°C, vorzugsweise 100 bis 110°C über einen Zeitraum von 1 bis 24 Stunden zu tempern.

Die TPU (A) werden, wie bereits ausgeführt wurde, bevorzugt nach dem Bandverfahren hergestellt. Hierzu werden die Aufbaukomponenten (a) bis (d) und gegebenenfalls (e) und/oder (f) bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise ein Förderband z.B. aus Metall, aufgebracht und mit einer Geschwindigkeit von 1 bis 20 m/Minute, vorzugsweise von 4 bis 10 m/Minute durch eine temperierte Zone von 1 bis 20 m, vorzugsweise von 3 bis 10 m Länge geführt. Die Reaktionstemperatur in der temperierten Zone beträgt 60 bis 200°C, vorzugsweise 80 bis 180°C. In Abhängigkeit vom Diisocyanatanteil in der Reaktionsmischung wird die Reaktion durch Kühlen oder Heizen so gesteuert, daß mindestens 90 %, vorzugsweise mindestens 98 der Isocyanatgruppen der Diisocyanate umgesetzt werden und die Reaktionsmischung bei der gewählten Reaktionstemperatur erstarrt. Aufgrund der freien Isocyanatgruppen im erstarrten Reaktionsprodukt, die bezogen auf das Gesamtgewicht, im Bereich von 0,05 bis 1 Gew.%, vorzugsweise von 0,1 bis 0,5 Gew.% liegen, werden TPU (A) mit einer sehr

5

niedrigen Schmelzviskosität bzw. einem hohen Schmelzindex erhalten.

B) Als Aufbaukomponente (B) enthalten die erfindungsgemäßen TPU/PES-Formmassen, wie bereits dargelegt wurde, bezogen auf 100 Gew.-Teile (A), (B) und (C) 5 bis 65 Gew.-Teile, vorzugsweise 10 bis 60 Gew.-Teile und insbesondere 12 bis 50 Gew.-Teile eines oder mehrerer thermoplastischer Polyester. Hierfür geeignete PES werden in der Literatur beschrieben. Sie enthalten mindestens einen aromatischen Ring gebunden in der Polykondensathauptkette, der sich von einer aromatischen Dicarbonsäure ableitet. Der aromatische Ring kann gegebenenfalls auch substituiert sein, beispielsweise durch Halogenatome, wie z.B. Chlor oder Brom oder/und durch lineare oder verzweigte Alkylgruppen mit vorzugsweise 1 bis 4 Kohlenstoffatomen, insbesondere 1 bis 2 Kohlenstoffatomen, wie z.B. einer Methyl-, Ethyl-, iso- bzw. n-Propyl-und/oder einer n-, iso- bzw. tert.-Butylgruppe.

Die PES können hergestellt werden durch Polykondensation von aromatischen Dicarbonsäuren oder Mischungen aus aromatischen und aliphatischen und/oder cycloaliphatischen Dicarbonsäuren sowie den entsprechenden esterbildenden Derivaten, wie z.B. Dicarbonsäureanhydriden, Mono- und/oder Diestern mit zweckmäßigerweise maximal 4 Kohlenstoffatomen im Alkoholrest, mit aliphatischen Dihydroxyverbindungen bei erhöhten Temperaturen, beispielsweise von 160 bis 260°C, in Gegenwart oder Abwesenheit von Veresterungskatalysatoren.

Als vorzugsweise zur Anwendung kommende aromatische Dicarbonsäuren sind die Naphthalindicarbonsäuren, Isophthalsäure und insbesondere Terephthalsäure oder Mischungen dieser Dicarbonsäuren zu nennen. Sofern Mischungen aus aromatischen und (cyclo)aliphatischen Dicarbonsäuren Anwendung finden, können bis zu 10 Mol.% der aromatischen Dicarbonsäuren durch aliphatische und/oder cycloaliphatische Dicarbonsäuren mit zweckmäßigerweise 4 bis 14 Kohlenstoffatomen, wie z.B. Bernstein-, Adipin-, Azelain-, Sebacin-, Dodecandisäure und/oder Cyclohexandicarbonsäure, ersetzt werden.

Als aliphatische Dihydroxyverbindungen kommen vorzugsweise Alkandiole mit 2 bis 6 Kohlenstoffatomen und Cycloalkandiole mit 5 bis 7 Kohlenstoffatomen in Betracht. Beispielhaft genannt seien und bevorzugt angewandt werden 1,2-Ethandiol, 1,4-Butandiol, 1,6-Hexandiol, Neopentylglykol und 1,4-Cyclohexandiol oder Mischungen aus mindestens zwei der genannten Diole.

Als PES (B) haben sich speziell die Polyalkylenterephthalate von Alkandiolen mit 2 bis 6 Kohlenstoffatomen hervorragend bewährt, so daß bevorzugt Polyethylenterephthalat und insbesondere bevorzugt Polybutylenterephthalat Anwendung finden.

Die relative Viskosität der PES (B) liegt im allgemeinen im Bereich von 1,2 bis 1,8, gemessen in einer 0,5 gew.%igen Lösung in einem phenol/o-Dichlorbenzolgemisch (Gewichtsverhältnis 1:1) bei 25°C.

C) Die TPU/PES-Formmassen enthalten erfindungsgemäß zur Verbesserung der Zähigkeit, insbesondere der Kälteschlagzähigkeit, und der Verarbeitbarkeit als zusätzliche Aufbaukomponente einen oder mehrere Pfropfkautschuke (C) auf der Grundlage eines Polybutadiens (C1) oder Polyacrylats (C2) oder eine Mischung der Pfropfkautschuke auf der Grundlage von (C1) und (C2). Der Anteil der Pfropfkautschuke (C) beträgt, wie bereits ausgeführt wurde, bezogen auf 100 Gew.-Teile der Formmassen, bestehend aus (A), (B) und (C) 5 bis 30 Gew.-Teile, vorzugsweise 5 bis 20 Gew.-Teile und insbesondere 10 bis 20 Gew.-Teile.

Geeignete Pfropfkautschuke auf Polybutadienbasis (C1) sind aufgebaut aus einer Pfropfgrundlage (C11), die vorteilhafterweise besteht aus einem Polybutadien, Polyisopren, aus Butadienstyrol-Copolymerisaten und Copolymerisaten aus Styrol oder Alkylstyrol, z.B. α-Methylstyrol, und konjugierten Dienen (schlagfesten Polystyrolen) und einer Pfropfauflage (C12), die hergestellt wird durch Polymerisation von Styrol, Alkylstyrol, z.B. α-Methylstyrol, Acrylnitril, Methacrylsäure-, Acrylsäurealkylester mit 1 bis 8 Kohlenstoffatomen im Alkylrest, vorzugsweise (Meth)acrylsäuremethylester, oder Vinylacetat oder durch Copolymerisation von mindestens zwei der genannten Monomeren z.B. Styrol und/oder Acrylnitril und/oder (Meth)-acrylsäureestern. Pfropfkautschuke der genannten Art (C1) werden beispielsweise beschrieben in der DE-A-16 94 173 (US-A-3 564 077) und der DE-A-23 48 377 (US-A-3 919 353). In Betracht kommen ferner ABS-Polymerisate, wie sie z.B. in der DE-A-20 35 390 (US-A-3 644 574) oder in der DE-A-22 48 242 (GB-A-1 409 275) beschrieben werden.

Vorzugsweise Anwendung finden Pfropfkautschuke auf Polybutadienbasis (C1), die aufgebaut sind aus C11) 60 bis 90 Gew.% vorzugsweise 65 bis 90 Gew.% und insbesondere 75 bis 85 Gew.%, bezogen auf das Gewicht von (C11) und (C12), eines Butadienpolymerisats mit mindestens 50 Gew.%, vorzugsweise mindestens 70 Gew.%, bezogen auf (C11), Butadienresten als Pfropfgrundlage und
C12) 10 bis 40 Gew.%, vorzugsweise 10 bis 35 Gew.% und insbesondere 15 bis 25 Gew.% bezogen auf das Gewicht von (C11) und (C12), einer Pfropfauflage (Pfropfhülle), die hergestellt wird durch Pfropfpolymerisation eines Acrylsäure- oder Methacrylsäurealkylesters oder Pfropfcopolymerisation einer Mischung, bestehend aus
10 bis 35 Gew.%, vorzugsweise 20 bis 35 Gew.%, bezogen auf das Mischungsgewicht, Acrylnitril und
65 bis 90 Gew.%, vorzugsweise 65 bis 80 Gew.%, bezogen auf das Mischungsgewicht, Styrol oder Pfropfcopolymerisation der vorgenannten Acrylnitril-Styrolmischung mit mindestens einem Acrylsäure- und/oder Methacrylsäurealkylester,
wobei die (Meth)acrylsäurealkylester Monoester der Acryl- bzw. Methacrylsäure mit Alkoholen mit 1 bis 8 Kohlenstoffatomen sind und die Alkohole weitere funktionelle Gruppen gebunden haben können, wie z.B. Ethergruppen oder vorzugsweise Epoxid- oder Hydroxylgruppen.

Die Pfropfgrundlage (C11) enthält, wie oben dargelegt wurde, zweckmäßigerweise mindestens 50 Gew.%, bezogen auf (C11), Butadienreste, wobei die bevorzugt eingesetzte Pfropfgrundlage aus reinem Polybutadien besteht. Sofern die Pfropfgrundlage aus einem Polybutadiencopolymerisat besteht, enthält sie als Reste anderer ethylenisch ungesättigter Monomerer vorteilhafterweise gebunden: Styrol-, Acrylnitril- und Acrylat- oder Methacrylatreste von (Meth)acrylsäurealkylestern mit 1 bis 4 Kohlenstoffatomen, wie z.B. Methyl(meth)acrylat oder Ethyl(meth)acrylat. Die Pfropfgrundlage (C11) enthält vorzugsweise einen Gelanteil von 70 Gew.%, gemessen in Toluol.

Die Pfropfkautschuke auf Polybutadienbasis (C1) besitzen einen mittleren Teilchendurchmesser $d_{50}$ von 0,05 bis 0,6 $\mu$m, vorzugsweise von 0,08 bis 0,5 $\mu$m und weisen einen Pfropfgrad G von 0,15 bis 0,55, vorzugsweise von 0,2 bis 0,4 auf. Der Pfropfgrad G bezeichnet das Gewichtsverhältnis von aufgepfropften Pfropfmonomeren zur Pfropfgrundlage und ist dimensionslos. Der mittlere Teilchendurchmesser $d_{50}$ ist der Durchmesser, oberhalb und unterhalb dessen jeweils 50 Gew.% der Teilchen liegen. Er kann bestimmt werden mittels Ultrazentrifugen-Messungen (W. Scholtan, H. Lange, Kolloid. Z. und Z. Polymere 250 (1972), 782-796) oder mittels Elektronenmikroskopie und anschließende Teilchenauszählung (G. Kämpf, H. Schuster, Angew. Makromolekulare Chemie 14 (1970), 111-129) oder mittels Lichtstreuungsmessungen.

Da bei der Pfropfreaktion zur Bildung der Pfropfauflage bekanntermaßen die Pfropfmonomeren (C12) nicht vollständig auf die Pfropfgrundlage (C11) aufgepfropft werden, enthalten die erfindungsgemäß verwendbaren Pfropfkautschuke auf Polybutadienbasis (C1) neben den eigentlichen gepfropften Polymeren auch Homo- und gegebenenfalls Copolymere der zur Pfropfung verwendeten Pfropfmonomeren (C12).

C2) Geeignete Pfropfkautschuke auf der Grundlage von Polyacrylaten (C2) sind aufgebaut aus
C21) einer Pfropfgrundlage, bestehend aus einem Acrylatkautschuk mit einer Glasübergangstemperatur von unter -20 °C und
C22) einer Pfropfauflage, hergestellt durch Pfropfpolymerisation mindestens eines polymerisierbaren ethylenisch ungesättigten Monomeren, dessen in Abwesenheit von (C21) gebildetes Homopolymerisat bzw. deren gebildete Copolymerisate eine Glasübergangstemperatur über 25 °C hätten.

Bevorzugt eingesetzte Pfropfmonomere zur Bildung der Pfropfauflage (C22) sind Styrol, Alkylstyrol, z.B. α-Methylstyrol, Acrylnitril, Acrylsäurealkylester oder Methacrylsäurealkylester, z.B. Methylmethacrylat, oder Mischungen aus mindestens zwei der genannten Monomeren. Bevorzugt angewandte Pfropfmonomermischungen sind solche aus Styrol und Acrylnitril im Gewichtsverhältnis 90:10 bis 50:50.

Die Pfropfkautschuke auf Polyacrylatbasis (C2) bestehen vorteilhafterweise aus
C21) 25 bis 98 Gew.%, vorzugsweise 50 bis 90 Gew.%, bezogen auf das Gesamtgewicht von (C2), (C21) und
C22) 2 bis 75 Gew.% vorzugsweise 10 bis 50 Gew.%, bezogen auf das Gesamtgewicht von (C2), (C22).

Die als Pfropfgrundlage in Betracht kommenden Acrylatkautschuke (C21) sind bevorzugt Polymerisate aus Acrylsäurealkylestern, die gegebenenfalls bis zu 50 Gew.%, bezogen auf das Gesamtgewicht, Einheiten anderer polymerisierbarer, ethylenisch ungesättigter Monomerer gebunden enthalten können. Sofern die als Pfropfgrundlage (C21) eingesetzten Acrylatkautschuke ihrerseits bereits Pfropfpolymerisate mit einem Dienkautschukkern sind, wird zur Berechnung der vorgenannten Prozentangabe der Dienkautschukkern nicht mitgerechnet. Zu den bevor zugten polymerisierbaren Acrylsäurealkylestern gehören die mit 1 bis 8 Kohlenstoffatomen im Alkylrest, wie z.B. Methyl-, Ethyl-, Butyl-, Octyl- und 2-Ethylhexylacrylat. Geeignet sind ferner Halogenalkylacrylate, vorzugsweise Halogen-$C_1$-$C_8$-alkylacrylate, wie z.B. Chlorethylacrylat und Arylalkylacrylate, wie z.B. Benzyl- oder Phenylethylacrylat. Die genannten Acrylsäurealkylester können einzeln oder in Form von Mischungen eingesetzt werden.

Die Acrylatkautschuke (C21) können unvernetzt, vernetzt oder vorzugsweise partiell vernetzt sein.

Zur Vernetzung können die Acrylsäurealkylester mit geeigneten Monomeren, die mehr als eine copolymerisierbare Doppelbindung besitzen, copolymerisiert werden. Beispiele für solche vernetzend wirkenden Monomere sind Carbonsäureester, hergestellt aus olefinisch ungesättigten Monocarbonsäuren mit 3 bis 8 Kohlenstoffatomen und olefinisch ungesättigten einwertigen Alkoholen mit 3 bis 12 Kohlenstoffatomen oder gesättigten mindestens zweiwertigen, vorzugsweise zwei- bis vierwertigen, Alkoholen mit 2 bis 20 Kohlenstoffatomen, wie z.B. Allylmethacrylat oder Alkylenglykoldi(meth)acrylat. Verwendbar sind auch mehrfach ungesättigte heterocyclische Verbindungen, wie Trivinyl- und Triallylcyanurat oder -isocyanurat, Tris-acryloyl-s-triazine, polyfunktionelle Vinylverbindungen, wie z.B. Di- und Trivinylbenzol sowie Triallylphosphat, Dicyclodihydropentadienylacrylat oder/und Diallylphthalat.

EP 0 420 016 A2

Besonders bewährt haben sich und daher vorzugsweise verwendet werden Butandioldiacrylat, Dicyclopentadienylacrylat und Butadien.

Die Menge der vernetzend wirkenden Monomeren beträgt vorzugsweise 0,02 bis 10 Gew.% insbesondere 0,05 bis 5 Gew.% bezogen auf das Gewicht der Pfropfgrundlage (C21).

Bei Verwendung von cyclischen, vernetzend wirkenden Monomeren mit mindestens drei ethylenisch ungesättigten Gruppen ist es vorteilhaft, ihre Menge auf 1 Gew.% der Pfropfgrundlage (C21) zu beschränken.

Geeignete "andere" polymerisierbare ethylenisch ungesättigte Monomere, die neben den Acrylsäurealkylestern gegebenenfalls zur Herstellung der Pfropfgrundlage (C21) dienen können, sind z.B. Acrylnitril, Styrol, $\alpha$-Methylstyrol, Acrylamide und Vinyl-$C_1$-$C_6$-alkylether.

Die als Pfropfgrundlage (C21) bevorzugt verwendeten Acrylatkautschuke sind Emulsionspolymerisate, die einen Gelgehalt von 60 Gew.% aufweisen, gemessen bei 25°C in Dimethylformamid (M. Hoffmann, H. Krömer, R. Kuhn, Polymeranalytik I und II, Georg-Thieme-Verlag Stuttgart 1977).

Als Pfropfgrundlage (C21) kommen auch Acrylatkautschuke in Betracht, die einen Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Anteil des Polydienkerns in der Pfropfgrundlage (C21) kann 0,1 bis 50 Gew.%, vorzugsweise 10 bis 40 Gew.% bezogen auf (C21) betragen. Pfropfgrundlage (C21) und Pfropfauflage (Pfropfhülle) können hierbei unabhängig voneinander unvernetzt, teilvernetzt oder vernetzt sein.

Als besonders bevorzugte Pfropfgrundlagen (C21) für Pfropfkautschuke auf Polyacrylatbasis (C2) kommen somit in Betracht: Acrylsäurealkylesterhomopolymerisate und -copolymerisate ohne Dienkautschukkern und Acrylsäurealkylesterhomopolymerisate- und -copolymerisate, die einen Dienkautschukkern gebunden enthalten.

Die Pfropfausbeute, d.h. der Quotient aus dem Gewicht der aufgepfropften Monomeren (bzw. dem Gewicht der Pfropfhülle) und dem Gewicht der eingesetzten Pfropfmonomeren beträgt in der Regel 20 bis 80 Gew.%, vorzugsweise 40 bis 80 Gew.%. Die Bestimmung der Pfropfausbeute erfolgt gemäß der Beschreibung von M. Hoffmann, H. Krömer und R. Kuhn in Polymeranalytik, Band 1, Georg-Thieme-Verlag, Stuttgart 1977.

Erfindungsgemäß verwendbare Pfropfkautschuke (C) auf Polyacrylatgrundlage (C2) werden beschrieben z.B. in der DE-B-24 44 584 (US-A-4 022 748) und der DE-A-27 26 256 (US-A-4 096 202).

Pfropfkautschuke auf Polyacrylatbasis (C2) dieser Art können auch erhalten werden, wenn man 2 bis 20 Gew.% vorzugsweise 2 bis 15 Gew.%, bezogen auf das Gewicht von (C2), eines Pfropfmonomeren aus der Gruppe der Alkylacrylate, Alkylmethacrylate mit 1 bis 8 Kohlenstoffatomen im Alkylrest, Styrol, $\alpha$-Methylstyrol, Acrylnitril und Vinylacetat oder Mischungen aus mindestens zwei Pfropfmonomeren auf 80 bis 98 Gew.%, vorzugsweise 85 bis 98 Gew.% bezogen auf das Gewicht von (C2), eines vollständig gebrochenen und in Wasser aufgeschlämmten Latex der Pfropfgrundlage (C21) in Abwesenheit von Suspendiermittel pfropft. Der anfallende pulverformige Pfropfkautschuk (C2) kann anschließend getrocknet und im gewünschten Verhältnis mit den Aufbaukomponenten (A) und (B) unter Einwirkung von Schwerkraft so homogenisiert werden, daß die mittlere Teilchengröße $d_{50}$ von (C2) in der erfindungsgemäßen TPU/PES-Formmasse 0,05 bis 3 $\mu$m, vorzugsweise 0,1 bis 2 $\mu$m und insbesondere 0,2 bis 1 $\mu$m beträgt.

Der Begriff "in Abwesenheit von Suspendierhilfsmittel" bedeutet im Sinne der Erfindung, die Abwesenheit von Stoffen, die nach Art und Menge die vorgenannten Pfropfmonomeren in der wäßrigen Phase suspendieren können. Diese Definition schließt jedoch die Anwesenheit von Stoffen nicht aus, die beispielsweise bei der Herstellung einer gepfropften Pfropfgrundlage (C21) suspendierend gewirkt haben. In derartigen Fällen muß das Koagulations- oder Fällungsmittel, das zum Brechen des Latex der Pfropfgrundlage (C21) verwendet wird, in einer Menge zugesetzt werden, die die suspendierte Wirkung der eingesetzten Stoffe zur Bildung der gepfropften Pfropfgrundlage (C21) kompensiert, d.h. es muß darauf geachtet und so verfahren werden, daß die Pfropfmonomeren zur Bildung der Pfropfauflage in der wäßrigen Phase keine stabilen Emulsionen ergeben.

Als Pfropfgrundlage (C21) können auch Acrylatkautschuke verwendet werden, die als wäßrige Emulsion (Latex) anfallen und deren Latexpartikel 1 bis 20 Gew.%, vorzugsweise 1 bis 10 Gew.%, bezogen auf (C21), bereits in wäßriger Emulsion aufgepfropfte Monomeren vorzugsweise Alkyl(meth)acrylate, Styrol, $\alpha$-Methylstyrol, Acrylnitril und/oder Vinylacetat, polymerisiert enthalten, die in Form ihrer Homo-oder Copolymerisate eine Glastemperatur von 0°C aufweisen würden.

Derartige Pfropfgrundlagen (C21) werden z.B. durch Emulsionspfropfpolymerisation erhalten. Nach einer anderen Verfahrensvariante kann man die Acrylatkautschuke durch Lösungs- oder Massepolymerisation herstellen, die Pfropfmonomeren aufpfropfen und anschließend die erhaltenen Kautschuke in eine wäßrige Emulsion, die sich für weitere Pfropfpolymerisationsverfahren eignet, überführen.

8

Als Pfropfgrundlagen (C21) für Pfropfkautschuke auf Polyacrylatbasis, hergestellt nach dieser besonderen Ausführungsform, eignen sich somit neben den bereits beschriebenen Pfropfgrundlagen auch in wäßriger Emulsion hergestellte Pfropfpolymerisate aus Acrylatpolymerisaten oder -copolymerisaten, die gegebenenfalls einen Dienkautschukkern enthalten und ethylenisch ungesättigten polymerisierbaren Monomeren.

Die erfindungsgemäß zur Schlagzähmodifizierung verwendbaren Pfropfkautschuke auf der Grundlage eines Polybutadiens (C1) oder eines Pfropfacrylats (C2) können allein oder als Mischungen Anwendung finden. Verwendet werden können ferner Mischungen von Pfropfkautschuken auf der Grundlage von (C1) und (C2).

Die erfindungsgemäßen schlagzäh modifizierten thermoplastischen TPU/PES-Formmassen können neben den erfindungswesentlichen Aufbaukomponenten (A), (B) und (C) gegebenenfalls auch faser- und/oder teilchenförmige Füllstoffe (D) und gegebenenfalls Hilfsstoffe (E) enthalten.

D) Der Anteil der Füllstoffe (D) beträgt üblicherweise 0 bis 60 Gew.%, vorzugsweise 2 bis 50 Gew.% und insbesondere 5 bis 30 Gew.%, bezogen auf das Gesamtgewicht der Aufbaukomponente (A) bis (C).

Als geeignete teilchenförmige Füllstoffe kommen beispielsweise in Betracht: organische Füllstoffe, wie z.B. Ruß, chlorierte Polyethylene und Melamin und anorganische Füllstoffe, wie z.B. Wollastonit, Calciumcarbonat, Magnesiumcarbonat, amorphe Kieselsäure, Calciumsilikat, Calciummetasilikat, Quarzmehl, Talkum, Kaolin, Glimmer, Feldspat, Glaskugeln, Si- oder Bornitrid sowie Mischungen dieser Füllstoffe.

Als verstärkend wirkende Füllstoffe besonders bewährt haben sich und finden daher vorzugsweise Fasern Anwendung, beispielsweise Kohlenfasern oder insbesondere Glasfasern, wobei die Fasern mit Haftvermittlern oder/und Schlichten ausgerüstet sein können. Geeignete Glasfasern, die z.B. auch in Form von Glasgeweben, -matten, -vliesen und/oder vorzugsweise Glasseidenrovings oder geschnittener Glasseide aus alkaliarmen E-Glasen mit einem Durchmesser von 5 bis 200 μm, vorzugsweise 6 bis 15 μm eingesetzt werden, weisen nach ihrer Einarbeitung in die TPU/PES-Formmassen im allgemeinen eine mittlere Faserlänge von 0,05 bis 1 mm, vorzugsweise von 0,1 bis 0,5 mm auf.

Von den vorstehend genannten teilchen- oder faserförmigen, verstärkend wirkenden Füllstoffen hat sich der Zusatz von insbesondere Glasfasern als vorteilhaft erwiesen, besonders dann, wenn eine hohe Wärmeformbeständigkeit oder sehr hohe Steifigkeit gefordert ist.

E) wie bereits ausgeführt wurde, können die erfindungsgemäßen TPU/PES-Formmassen auch Hilfsstoffe (E) enthalten. Die Hilfsstoffe können identisch sein mit üblichen zur Herstellung von TPU geeigneten Hilfsmitteln (c) oder Zusatzstoffen (f) und daher bereits in dem TPU (A) incorporiert sein. Der Anteil der Hilfsstoffe (E) beträgt im allgemeinen 0 bis 10 Gew.%, vorzugsweise 0 bis 5 Gew.%, bezogen auf das Gesamtgewicht der Aufbaukomponenten (A) bis (C). Als derartige Hilfsstoffe seien beispielsweise genannt: Keimbildungsmittel, Oxidationsverzögerer, Stabilisatoren, Gleit- und Entformungshilfsmittel und Farbstoffe.

Als Keimbildungsmittel können z.B. Talkum, Calciumfluorid, Natriumphenylphosphinat, Aluminiumoxid und feinteiliges Polytetrafluorethylen in Mengen bis zu 5 Gew.%, bezogen auf das Gewicht der Aufbaukomponenten (A) bis (C) eingesetzt werden.

Geeignete Oxidationsverzögerer und Wärmestabilisatoren, die den TPU/PES-Formmassen zugesetzt werden können, sind beispielsweise Halogenide von Metallen der Gruppe I des periodischen Systems, z.B. Natrium-, Kalium-, Lithium-Halogenide, gegebenenfalls in Verbindung mit Kupfer-(I)-Halogeniden, z.B. Chloriden, Bromiden oder Iodiden, sterisch gehinderte Phenole, Hydrochinone, sowie substituierte Verbindungen dieser Gruppen und Mischungen davon, die vorzugsweise in Konzentrationen bis zu 1 Gew.%, bezogen auf das Gewicht der Aufbaukomponenten (A) bis (C), verwendet werden.

Beispiele für UV-Stabilisatoren sind verschiedene substituierte Resorcine, Salicylate, Benzotriazole und Benzophenone sowie sterisch gehinderte Amine, die im allgemeinen in Mengen bis zu 2,0 Gew.% bezogen auf das Gewicht der Aufbaukomponenten (A) bis (C), eingesetzt werden.

Gleit- und Entformungsmittel, die in der Regel ebenfalls in Mengen bis zu 1 Gew.% bezogen auf das Gewicht der Aufbaukomponenten (A) bis (C), zugesetzt werden, sind $C_{12}$-$C_{36}$-Fettsäuren, z.B. Stearinsäuren, Fettalkohole, z.B. Stearylalkohol, Fettsäureester oder -amide, z.B. Stearinsäureester und -amide sowie die Fettsäureester des Pentaerythrits und Montanesterwachse.

Ferner können organische Farbstoffe, wie z.B. Nigrosin, Pigmente, z.B. Titandioxid, Cadmiumsulfid, Cadmiumsulfidselenid, Phthalocyanine, Ultramarinblau oder Ruß in Mengen z.B. bis zu 5 Gew.%, bezogen auf die Aufbaukomponente (A) bis (C), zugesetzt werden.

Die erfindungsgemäßen schlagzäh modifizierten, thermoplastischen TPU/PES-Formmassen können nach beliebigen Verfahren hergestellt werden, bei denen aus dem TPU (A), dem PES (B) und dem Pfropfkautschuk (C) sowie gegebenenfalls den Füllstoffen (D) und Hilfsstoffen (E) im wesentlichen homogene Zusammensetzungen erhalten werden. Beispielsweise können die Aufbaukomponenten (A) bis (C) und gegebenenfalls (D) und/oder (E) bei Temperaturen von 0 bis 150°C, vorzugsweise 15 bis 30°C gemischt und anschließend verschmolzen werden oder die Komponenten können direkt in der Schmelze vermischt werden. Nach einer anderen Verfahrensvariante können (A) mit (C) oder (B) mit (C) gemischt werden und diese Mischungen in (B) bzw. (A) eingearbeitet werden, wobei (D) und/oder (E) bereits in einer der Aufbaukomponenten (A) bis (C) incorporiert sein können oder nachträglich zugesetzt werden können.

Die Herstellung der erfindungsgemäßen TPU/PES-Formmassen erfolgt bei Temperaturen im Bereich von 190 bis 250°C, vorzugsweise 210 bis 240°C und einer Verweilzeit von 0,5 bis 10 Minuten, vorzugsweise von 0,5 bis 3 Minuten in beispielsweise fließfähigem, erweichten oder vorzugsweise geschmolzenem zustand der Aufbaukomponenten (A) bis (C) z.B. durch Rühren, Walzen, Kneten oder vorzugsweise Extrudieren, beispielsweise unter Verwendung von üblichen Plastifizierungsvorrichtungen, wie z.B. Brabender-oder Banbury-Mühlen, Knetern und Extrudern, vorzugsweise eines Doppelschnecken- oder Preßspritzmischextruders.

Nach dem zweckmäßigsten und daher vorzugsweise angewandten Herstellungsverfahren werden die TPU (A), PES (B) und Pfropfkautschuke (C) sowie gegebenenfalls (D) und/oder (E) gemischt, bei Temperaturen von 190 bis 250°C, vorzugsweise in einem Extruder, zusammengeschmolzen, der Schmelze gegebenenfalls die Komponente (D) und/oder (E) einverleibt und diese danach abkühlen gelassen und die erhaltenen TPU/PES-Formmassen zerkleinert.

Die erfindungsgemäßen TPU/PES-Formmassen lassen sich leicht zu Formkörpern mit guter Oberflächenbeschaffenheit und verbesserter Schlagzähigkeit bei hoher Steifigkeit, insbesondere bei tiefen Temperaturen, verarbeiten, wobei weder in der Schmelze noch im Formkörper eine Entmischung in die Komponenten (A) oder (B) oder (C) eintritt.

Die TPU/PES-Formmassen eignen sich ferner zur Extrusion von Folien, insbesondere von Tiefziehfolien.

Beispiele

Zur Herstellung der erfindungsgemäßen, schlagzäh modifizierten thermoplastischen TPU/PES-Formmassen werden die folgenden Aufbaukomponenten verwendet:

A) Thermoplastische Polyurethan-Elastomer

A1: TPU mit einer Härte nach Shore D von 69, das hergestellt wurde durch Umsetzung einer Mischung aus 0,5 Mol Butandiol-1,4-polyadipat mit einem Molekulargewicht von 2000 und 5,86 Mol Butandiol-1,4 mit 4,4'-Diphenylmethan-diisocyanat im Verhältnis von NCO-:OH-Gruppen von 1 bei Temperaturen im Bereich von 80 bis 170°C nach dem Bandverfahren.

A2: TPU mit einer Härte nach Shore D von 74, das hergestellt wurde analog den Angaben von A1, jedoch unter Verwendung eines Verhältnisses von NCO-:OH-Gruppen von 1,04.

A3: TPU mit einer Härte nach Shore D von 64, das hergestellt wurde analog den Angaben von A1, jedoch unter Verwendung von 3,87 Mol Butandiol-1,4.

A4: TPU mit einer Härte nach Shore A von 90, das hergestellt wurde analog den Angaben von A1, jedoch unter Verwendung von 1,7 Mol Butandiol-1,4.

A5: TPU mit einer Härte nach Shore D von 74, hergestellt durch Umsetzung einer Mischung aus 0,5 Mol Butandiol-1,4-Ethylenglykolpolyadipat mit einem Butandiol-1,4:Ethylenglykol-Molverhältnis von 1:1 und einem Molekulargewicht von 2000 und 5,66 Mol Butandiol-1,4 mit 4,4'-Diphenylmethan-diisocyanat im Verhältnis von NCO-:OH-Gruppen von 1.

Die beschriebenen TPU A1 bis A5 enthielten, bezogen auf das Alkandiol-polyadipatgewicht, 1 Gew.% Diisopropylphenylcarbodiimid als Hydrolysestabilisator.

A6: TPU mit einer Härte nach Shore D von 64, das hergestellt wurde durch Umsetzung einer Mischung aus 1 Mol Polytetramethylenglykol mit einem Molekulargewicht von 1000 und 3,87 Mol Butandiol-1,4 mit 4,4'-Diphenylmethan-diisocyanat im Verhältnis von NCO-:OH-Gruppen von 1 bei Temperaturen im Bereich von 90 bis 170°C nach dem Bandverfahren.

B) Thermoplastische Polyester

B1: Polyethylenterephthalat mit einer relativen Viskosität von 1,38 (gemessen an einer 0,5 gew.%igen Lösung in Phenol/o-Dichlorbenzol im Gew.-Verhältnis 1:1).

B2: Polybutylenterephthalat mit einer relative Viskosität von 1,4, gemessen wie bei B2.

C1) Pfropfkautschuke auf Polybutadienbasis

C1I: Pfropfkautschuk mit einer Pfropfgrundlage (75 Gew.%) aus Polybutadien und einer Pfropfauflage (25 Gew.%) eines Copolymeren aus Styrol und Acrylnitril im Gewichtsverhältnis 75:25, hergestellt durch Emulsionspolymerisation in an sich bekannter Weise. Der mittlere Teilchendurchmesser $d_{50}$, der definiert ist als der Durchmesser, ober- und unterhalb dessen die Durchmesser von jeweils 50 % der Teilchen liegen, betrug 250 nm.

C1II: Pfropfkautschuk hergestellt analog C1I, jedoch mit dem Unterschied, daß die Pfropfauflage aus einem Copolymeren aus α-Methylstyrol und Acrylnitril im Gewichtsverhältnis 75:25 besteht.

C1III: Pfropfkautschuk mit einer Pfropfgrundlage (70 Gew.%) aus Polybutadien und einer zweistufig hergestellten Pfropfauflage (insgesamt 30 Gew.%), wobei die 1. Pfropfauflage (10 Gew.%) aus Polystyrol und die 2. Pfropfauflage (20 Gew.%) aus einem Copolymeren aus Methylmethacrylat, n-Butylacrylat und Glycidylmethacrylat im Gewichtsverhältnis von 89:10:1 bestehen. Das Pfropfpolymerisat, das durch Emulsionspolymerisation in an sich bekannter Weise hergestellt wurde, besaß einen mittleren Teilchendurchmesser d50 von 240 μm.

C2) Pfropfkautschuk auf Polyacrylatbasis

C2I: Pfropfkautschuk mit einer Pfropfgrundlage (75 Gew.%) aus einem vernetzten Poly-n-butylacrylat und einer Pfropfauflage (25 Gew.%) aus einem Copolymeren aus Styrol und Acrylnitril im Gewichtsverhältnis 75:25, hergestellt durch Emulsionspolymerisation in an sich bekannter Weise. Der Pfropfkautschuk besaß einen mittleren Teilchendurchmesser $d_{50}$ von 210 μm.

C2II: Pfropfkautschuk mit einer Pfropfgrundlage (75 Gew.%) aus einem mit Butandioldiacrylat vernetzten Poly-n-butylacrylat und einer Pfropfauflage (25 Gew.%), aufgebaut aus einem Copolymeren aus Styrol, Acrylnitril und tert.-Butylacrylat im Gewichtsverhältnis 73:24:3. Der Pfropfkautschuk, der in an sich bekannter Weise durch Emulsionspolymerisation hergestellt wurde, besaß einen mittleren Teilchendurchmesser $d_{50}$ von 420 μm.

D) Füllstoffe

E-Glasfasern in Form eines Rovings oder einer Schnittfaser. Der Glasfaserdurchmesser betrug 10 μm.


Herstellung der schlagzäh modifizierten thermoplastischen TPU/PES-Formmassen


Beispiele 1 bis 30 und Vergleichsbeispiele I bis IV

Zur Herstellung der TPU/PES-Formmassen wurden die Aufbaukomponenten (A), (B) und (C) bei einer Temperatur von 23°C intensiv gemischt, die Mischung in einen Zweischneckenextruder eingebracht, bei 230°C aufgeschmolzen, innerhalb eines Zeitraums von 2 Minuten homogenisiert und danach in ein Wasserbad extrudiert.

Bei Verwendung von E-Glasfasern wurden diese in Form von Schnittfasern oder Rovings der homogenisierten Schmelze einverbleibt.

Nach der Granulierung und Trocknung wurden die TPU/PES-Formmassen mit Hilfe einer Spritzgußmaschine bei 230°C zu Prüfkörpern verformt, an denen, ohne weitere Nachbehandlung, die Kerbschlagzähigkeit nach DIN 53 453, die Reißdehnung nach DIN 53 455 und der Elastizitätsmodul nach DIN 53 457 gemessen wurden.

Die Art und Menge der verwendeten TPU (A), PES (B) und Pfropfkautschuke (C1) und (C2) sowie gegebenenfalls verstärkend wirkende Füllstoffe (D) und die an den Prüfkörpern gemessenen mechanischen Eigenschaften sind in den folgenden Tabellen I bis IV zusammengefaßt.

EP 0 420 016 A2

Tabelle I

| Vgl. bsp. / Bsp. | Einsatzstoffe | | | | | | E-Modul | mechanische Eigenschaften Kerbschlagzähigkeit [kJ/m²] | | | Reißdehnung [%] |
| | TPU (A) | | PES (B) | | Pfropfkautschuk C1 | | | | | | |
| | Menge | Art | Menge | Art | Menge | Art | | | | | |
| | [Gew-Tl.] | | [Gew-Tl.] | | [Gew-Tl.] | | [N/mm²] | 23°C | -20°C | -30°C | |
| I | 50 | A1 | 50 | B1 | - | - | 961 | 5,3 | 2,2 | 1,4 | 11 |
| II | 70 | A1 | 30 | B1 | - | - | 442 | 10 | 1,8 | 0,6 | 130 |
| III | 50 | A1 | 50 | B2 | - | - | 996 | 35 | 6,8 | 4,8 | 40 |
| IV | 70 | A1 | 30 | B2 | - | - | 388 | o.Br.* | 10,8 | 7,3 | 220 |
| **Bsp.** | | | | | | | | | | | |
| 1 | 50 | A1 | 40 | B1 | 10 | C1III | 871 | 26 | 8,2 | 5,2 | 180 |
| 2 | 70 | A1 | 20 | B1 | 10 | C1III | 405 | 52 | 16 | 7,4 | 320 |
| 3 | 50 | A1 | 40 | B2 | 10 | C1III | 892 | 44 | 12,1 | 7,6 | 310 |
| 4 | 70 | A1 | 20 | B2 | 10 | C1III | 342 | o.Br.* | 18,4 | 12,6 | 360 |
| 5 | 50 | A2 | 40 | B2 | 10 | C1III | 905 | 56 | 14,3 | 8,7 | 320 |
| 6 | 50 | A3 | 40 | B2 | 10 | C1III | 1050 | 43 | 8,4 | 6,9 | 305 |
| 7 | 50 | A4 | 40 | B2 | 10 | C1III | 420 | o.Br.* | 26 | 13,5 | 350 |
| 8 | 50 | A5 | 40 | B2 | 10 | C1III | 920 | 38 | 10,5 | 6,8 | 260 |
| 9 | 50 | A6 | 40 | B2 | 10 | C1III | 1020 | 48 | 10,4 | 8,5 | 295 |
| 10 | 50 | A3 | 40 | B2 | 10 | C1I | 1070 | 41 | 8,2 | 6,3 | 310 |
| 11 | 50 | A3 | 40 | B2 | 10 | C1II | 1060 | 45 | 11,3 | 8,2 | 320 |

* ohne Bruch

Tabelle II

| Bsp. | Einsatzstoffe | | | | | | | mechanische Eigenschaften | | | |
|---|---|---|---|---|---|---|---|---|---|---|---|
| | TPU (A) | | PES (B) | | Pfropfkautschuk C1 | | | Glasfasern Menge [Gew.-Tl.] | E-Modul | Kerbschlagzähigkeit [kJ/m$^2$] | |
| | Menge | Art | Menge | Art | Menge | Art | | | | | |
| | [Gew.-Tl.] | | [Gew.-Tl.] | | [Gew.-Tl.] | | | | [N/mm$^2$] | 23°C | -20°C |
| 12 | 50 | A1 | 43 | B2 | 7 | C1III | | 20 | 3100 | o.Br.* | o.Br.* |
| 13 | 50 | A3 | 43 | B2 | 7 | C1III | | 20 | 4600 | 110 | 46 |
| 14 | 50 | A4 | 43 | B2 | 7 | C1III | | 20 | 1900 | o.Br.* | o.Br.* |
| 15 | 50 | A6 | 43 | B2 | 7 | C1III | | 20 | 4400 | o.Br.* | 55 |
| 16 | 56 | A1 | 37 | B2 | 7 | C1III | | 20 | 2800 | o.Br.* | o.Br.* |

* ohne Bruch

Tabelle III

| Bsp. | Einsatzstoffe | | | | | | E-Modul | mechanische Eigenschaften Kerbschlagzähigkeit [kJ/m$^2$] | | | Reißdehnung [%] |
| | TPU (A) | | PES (B) | | Pfropfkautschuk C2 | | | | | | |
| | Menge | Art | Menge | Art | Menge | Art | | | | | |
| | [Gew-Tl.] | | [Gew-Tl.] | | [Gew-Tl.] | | [N/mm$^2$] | 23°C | -20°C | -30°C | |
| 17 | 50 | A1 | 40 | B1 | 10 | C2I | 882 | 28 | 8,8 | 4,6 | 210 |
| 18 | 70 | A1 | 20 | B1 | 10 | C2I | 423 | 55 | 18 | 6,8 | 360 |
| 19 | 50 | A1 | 40 | B2 | 10 | C2I | 910 | 48 | 13 | 7,2 | 350 |
| 20 | 70 | A1 | 20 | B2 | 10 | C2I | 364 | o.Br.* | 20 | 10,8 | 390 |
| 21 | 50 | A2 | 40 | B2 | 10 | C2I | 916 | 55 | 14 | 7,6 | 380 |
| 22 | 50 | A4 | 40 | B2 | 10 | C2I | 430 | o.Br.* | 19 | 11 | 410 |
| 23 | 50 | A1 | 40 | B2 | 10 | C2II | 905 | 45 | 16 | 7,5 | 370 |
| 24 | 50 | A6 | 40 | B2 | 10 | C2I | 956 | 55 | 14 | 9,8 | 375 |
| 25 | 50 | A6 | 40 | B2 | 10 | C2II | 945 | 58 | 20 | 10,7 | 390 |

* ohne Bruch

Tabelle IV

| Bsp. | Einsatzstoffe | | | | | | Glasfasern Menge [Gew.-Tl.] | mechanische Eigenschaften | | |
|---|---|---|---|---|---|---|---|---|---|---|
| | TPU (A) | | PES (B) | | Pfropfkautschuk C1 | | | E-Modul | Kerbschlagzähigkeit [kJ/m$^2$] | |
| | Menge [Gew.-Tl.] | Art | Menge [Gew.-Tl.] | Art | Menge [Gew.-Tl.] | Art | | [N/mm$^2$] | 23°C | -20°C |
| 26 | 50 | A1 | 43 | B2 | 7 | C2I | 20 | 3100 | o.Br.* | 95 |
| 27 | 50 | A2 | 43 | B2 | 7 | C2I | 20 | 3200 | o.Br.* | o.Br.* |
| 28 | 50 | A4 | 43 | B2 | 7 | C2I | 20 | 1800 | o.Br.* | o.Br.* |
| 29 | 50 | A6 | 43 | B2 | 7 | C2I | 20 | 4200 | o.Br.* | 76 |
| 30 | 65 | A1 | 28 | B2 | 7 | C2I | 20 | 2900 | o.Br.* | o.Br.* |

* ohne Bruch

EP 0 420 016 A2

**Ansprüche**

1. Schlagzäh modifizierte thermoplastische Polyurethan-Polyester-Formmassen, enthaltend, bezogen auf 100 Gew.-Teile,
 A) 30 bis 90 Gew.-Teile mindestens eines thermoplastischen Polyurethan-Elastomeren (A),
 B) 5 bis 65 Gew.-Teile mindestens eines thermoplastischen Polyesters (B) und
 C) 5 bis 30 Gew.-Teile mindestens eines Pfropfkautschuks (C) auf der Grundlage eines
 C1) Polybutadiens oder
 C2) Polyacrylats
 oder einer Mischung von Pfropfkautschuken auf der Grundlage von (C1) und (C2) sowie, bezogen auf das Gesamtgewicht von (A) bis (C),
 D) 0 bis 60 Gew.% mindestens eines faser- und/oder teilchenförmigen Füllstoffs und
 E) 0 bis 10 Gew.% mindestens eines Hilfsstoffes.

2. Schlagzäh modifizierte thermoplastische Polyurethan-Polyester-Formmassen, bestehend aus
 A) 30 bis 90 Gew.-Teilen mindestens eines thermoplastischen Polyurethan-Elastomeren (A),
 B) 5 bis 65 Gew.-Teilen mindestens eines thermoplastischen Polyesters (B) und
 C) 5 bis 30 Gew.-Teilen mindestens eines Pfropfkautschuks (C) auf der Grundlage eines
 C1) Polybutadiens oder
 C2) Polyacrylats
 oder einer Mischung von Pfropfkautschuken auf der Grundlage von (C1) und (C2), wobei sich die Gew.-Teile von (A) bis (C) zu 100 Gew.-Teilen ergänzen, sowie, bezogen auf das Gesamtgewicht von (A) bis (C),
 D) 0 bis 60 Gew.% mindestens eines faser- und/oder teilchenförmigen Füllstoffs und
 E) 0 bis 10 Gew.% mindestens eines Hilfsstoffes.

3. Schlagzäh modifizierte thermoplastische Polyurethan-Polyester-Formmassen nach Anspruch 1 oder 2, dadurch gekennzeichnet, daß die thermoplastischen Polyurethan-Elastomeren (A) hergestelt werden durch Umsetzung von
 a) organischen Diisocyanaten mit
 b) Polyhydroxylverbindungen mit Molekulargewichten von 500 bis 8000 und
 c) Diolen mit Molekulargewichten von 60 bis 400
 in einem Äquivalenzverhältnis von NCO-Gruppen der organischen Diisocyanate (a) zur Summe der Hydroxylgruppen der Komponenten (b) und (c) von 0,95:1,0 bis 1,1:1,0.

4. Schlagzäh modifizierte thermoplastische Polyurethan-Polyester-Formmassen nach einem der Ansprüche 1 bis 3, dadurch gekennzeichnet, daß die thermoplastischen Polyurethan-Elastomeren (A) hergestelt werden durch Umsetzung von
 a) aromatischen Diisocyanaten, vorzugsweise 4,4'-Diphenylmethandiisocyanat, mit
 b) im wesentlichen linearen Polyhydroxylverbindungen, vorzugsweise Polyalkylenglykolpolyadipaten mit 2 bis 6 C-Atomen im Alkylenrest und Molekulargewichten von 500 bis 6000 oder hydroxylgruppenhaltigem Polytetrahydrofuran mit einem Molekulargewicht von 500 bis 8000, und
 c) Butandiol-1,4.

5. Schlagzäh modifizierte thermoplastische Polyurethan-Polyester-Formmassen nach einem der Ansprüche 1 bis 4, dadurch gekennzeichnet, daß die thermoplastischen Polyurethan-Elastomeren (A) eine Härte nach Shore A von 75 bis Shore D von 75 besitzen und hergestellt werden nach dem Bandverfahren.

6. Schlagzäh modifizierte thermoplastische Polyurethan-Polyester-Formmassen nach einem der Ansprüche 1 bis 5, dadurch gekennzeichnet, daß die thermoplastischen Polyester (B) eine relative Viskosität im Bereich von 1,2 bis 1,8 aufweisen, gemessen in einer 0,5 gew.%igen Lösung in einem Phenol/o-Dichlorbenzolgemisch im Gewichtsverhältnis 1:1 bei 25°C, und hergestellt werden durch Polykondensation von aromatischen Dicarbonsäuren mit Alkandiolen mit 2 bis 6 Kohlenstoffatomen im Alkylenrest.

7. Schlagzäh modifizierte thermoplastische Polyurethan-Polyester-Formmassen nach einem der Ansprüche 1 bis 6, dadurch gekennzeichnet, daß die thermoplastischen Polyester (B) aus Polyethylenterephthalat und/oder vorzugsweise Polybutylenterephthalat bestehen.

8. Schlagzäh modifizierte thermoplastische Polyurethan-Polyester-Formmassen nach einem der Ansprüche 1 bis 7, dadurch gekennzeichnet, daß die Pfropfkautschuke (C) auf der Grundlage von Polybutadien (C1) aufgebaut sind aus
 C11) einer Pfropfgrundlage, bestehend aus Polybutadienen, Polyisoprenen, Butadien-Styrol-Copolymeri-

16

saten und Copolymerisaten aus Styrol oder Alkylstyrol und konjugierten Dienen, und

C12) einer Pfropfauflage, hergestellt durch Polymerisation von Styrol, Alkylstyrol, Acrylnitril, Methacrylsäure-, Acrylsäurealkylestern oder Vinylacetat oder Copolymerisation von mindestens zwei der genannten Monomeren.

9. Schlagzäh modifizierte thermoplastische Polyurethan-Polyester-Formmassen nach einem der Ansprüche 1 bis 7, dadurch gekennzeichnet, daß die Pfropfkautschuke (C) auf der Grundlage von Polybutadien (C1) aufgebaut sind aus

C11) 60 bis 90 Gew.%, bezogen auf das Gewicht von (C11) und (C12), eines Polybutadiens als Pfropfgrundlage und

C12) 10 bis 40 Gew.%, bezogen auf das Gewicht von (C11) und (C12), einer Pfropfauflage, hergestellt durch Polymerisation eines Acrylsäure- oder Methacrylsäurealkylesters oder Copolymerisation einer Mischung aus Acrylnitril und Styrol im Gewichtsverhältnis 10:90 bis 35:65.

10. Schlagzäh modifizierte thermoplastische Polyurethan-Polyester-Formmassen nach einem der Ansprüche 1 bis 7, dadurch gekennzeichnet, daß die Pfropfkautschuke (C) auf der Grundlage von Polyacrylat (C2) aufgebaut sind aus

C21) einer Pfropfgrundlage, bestehend aus einem Acrylatkautschuk mit einer Glasübergangstemperatur von unter -20 °C und

C22) einer Pfropfauflage, hergestellt durch Polymerisation von Styrol, Alkylstyrol, Acrylnitril, Acrylsäurealkylestern oder Methacrylsäurealkylestern oder Copolymerisation von mindestens zwei der genannten Monomeren.

11. Schlagzäh modifizierte thermoplastische Polyurethan-Polyester-Formmassen nach einem der Ansprüche 1 bis 7, dadurch gekennzeichnet, daß die Pfropfkautschuke (C) auf der Grundlage von Polyacrylat (C2) aufgebaut sind aus

C21) 25 bis 98 Gew.%, bezogen auf das Gewicht von (C21) und (C22), eines Acrylatkautschuks mit einer Glasübergangstemperatur von unter -20 °C und

C22) 2 bis 75 Gew.% bezogen auf das Gewicht von (C21) und (C22), einer Pfropfauflage, hergestellt durch Polymerisation von Styrol, Alkylstyrol, Acrylnitril, Acrylsäurealkylestern oder Methacrylsäurealkylestern oder Copolymerisation von mindestens zwei der genannten Monomeren, vorzugsweise einer Mischung aus Styrol und Acrylnitril im Gewichtsverhältnis 90:10 bis 50:50.

12. Verfahren zur Herstellung der schlagzäh modifizierten thermoplastischen Polyurethan-Polyester-Formmassen nach einem der Ansprüche 1 bis 11, dadurch gekennzeichnet, daß man die Komponenten (A) bis (C) sowie gegebenenfalls (D) und/oder (E) in einer geeigneten Mischvorrichtung, vorzugsweise einem Zweischneckenextruder, bei einer Temperatur im Bereich von 190 bis 250 °C und in einer Verweilzeit von 0,5 bis 10 Minuten homogenisiert.

13. Verwendung der schlagzäh modifizierten thermoplastischen Polyurethan-Polyester-Formmassen nach einem der Ansprüche 1 bis 11 zur Herstellung von Formkörpern.